# EUROPÄISCHE PATENTANMELDUNG

(11) **EP 4 342 865 A1**
(43) Veröffentlichungstag der Anmeldung: **27.03.2024**
(21) Anmeldenummer: 22197096.5
(22) Anmeldetag: 22.09.2022
(51) Int. Cl.: C04B 28/04, C04B 28/08, C22B 1/245

(54) **AGGLOMERATSTEIN ZUM EINSATZ IN EINEM ELEKTROOFEN**

(71) Anmelder: ThyssenKrupp Steel Europe AG, 47166 Duisburg (DE)
(72) Erfinder: Erdmann, Ronald, 46537 Dinslaken (DE); Ellerik, Sören, 47506 Neukirchen-Vluyn (DE)
(74) Vertreter: ThyssenKrupp Steel Europe AG

(57) **Zusammenfassung**

Die Erfindung betrifft einen Agglomeratstein zum Einsatz in einem Elektroofen.

## Beschreibung

Die Erfindung betrifft einen Agglomeratstein zum Einsatz in einem Elektroofen.

Aus dem Stand der Technik sind Agglomeratsteine für den Einsatz in Hochöfen bekannt, s. DE 10 2004 027 193 A1.

Neben der konventionellen Hochofenroute zur Roheisenerzeugung existiert auch die Route über Direktreduktion und anschließendem Erschmelzen des reduzierten Eisenerzes (Eisenschwamm) zu Roheisen in einem Elektroofen. Je nach Reduktionsgas kann der Eisenschwamm mit mehr oder mit weniger, insbesondere mit weniger bei Verwendung von Wasserstoff, Kohlenstoff dotiert sein. Um bestehende Prozesse sicherstellen und beibehalten zu können, erweist sich ein Mindestgehalt von Kohlenstoff im Roheisen als vorteilhaft. Dazu kann Kohlenstoff in Form von Koks oder Kohle zusätzlich in den Elektroofen eingebracht werden, s. EP 0 257 450 A2.

Im Gegensatz zum Stand der Technik werden für die Herstellung von Roheisen über die Route Direktreduktionsanlage/Einschmelzer agglomerierte Zuschlagstoffe umfassend kohlenstoffhaltigen Stoffen, welche eine Aufkohlung des Eisenschwamms nach der Direktreduktionsanlage im Einschmelzer auf Kohlenstoffgehalte > 2,5% eines Standardroheisens ermöglichen, so dass in den nachgeschalteten LD Stahlwerken ohne weitere Vorbehandlung das Roheisen zu Rohstahl weiterverarbeitet werden kann.

Die Erfindung betrifft somit einen Agglomeratstein zum Einsatz im Elektroofen, welcher in Gewichts-% bezogen auf den trockenen Zustand 6 - 15% eines Zement-Bindemittels, 25 - 60% eines Kohlenstoff-Trägers und als Rest einen Metall-Träger aufweist.

Dabei ist die Zusammensetzung des erfindungsgemäßen Agglomeratsteins derart aufeinander abgestimmt, dass, wenn der Einschmelzbetrieb im Gange ist, eine Aufkohlung des flüssigen Roheisens durch den Kohlenstoff-Träger wie auch eine zusätzliche Ausbringung an Metall respektive Eisen durch den Metall-Träger bewirkt werden kann. Die besondere Zusammensetzung erfindungsgemäßer Agglomeratsteine machen diese Steine besonders geeignet für das Aufkohlen des Roheisens im Elektroofen.

Um den Agglomeratstein während des Einschmelzbetriebs unterhalb die flüssige Schlacke, welche sich während des Einschmelzbetriebs oberhalb der flüssigen Schlacke ausbildet, direkt in den Kontakt mit dem vorzugsweise aufzukohlenden flüssigen Roheisen zu bekommen, beträgt die Dichte des Agglomeratsteins gemäß einer Ausgestaltung der Erfindung mindestens 1,90 kg/m³. Die Dichte des Agglomeratsteins beträgt insbesondere mindestens 1,950 kg/m³, vorzugsweise mindestens 2,0 kg/m³, bevorzugt mindestens 2,050 kg/m³, besonders bevorzugt mindestens 2,10 kg/m³, weiter bevorzugt mindestens 2,150 kg/m³.

Gemäß einer Ausgestaltung der Erfindung liegen die Metall-Träger in Form von Erzen, Rest-und/oder Kreislaufstoffe, die insbesondere metallhaltig sind, vor. Bevorzugt sind die Metall-Träger Eisen-Träger. Bei den Erzen handelt es um kein metallisches Eisen, sondern um nur reines Eisenoxid, das mit wenig Gangart verunreinigt sein kann. Die bevorzugten Eisenerze liegen in hämatitischer (Fe₂O₃), magnetitischer (Fe₃O₄), wüstitischer (FeO) Modifikation und/oder als Geothit (FeO(OH)) vor, deren Körnung respektive Körnerdurchmesser bis zu 5 mm, insbesondere bis zu 3 mm, vorzugsweise bis zu 2 mm beträgt. Die insbesondere metallhaltigen Rest- und/oder Kreislaufstoffe fallen beispielsweise bei der Stahlerzeugung und -verarbeitung in Form von Filterstäuben, Gichtstäuben oder Walzzunder an, deren Körnung respektive Körnerdurchmesser bis zu 5 mm beträgt. Die Metall-Träger respektive Eisen-Träger können auch in Form von Staub bzw. Stäuben mit einer Körnung kleiner als 1 mm verwendet werden. Eisen-Träger können alternativ insbesondere auch nur metallisches Eisen anstelle von oxidischem Eisen aufweisen.

Gemäß einer Ausgestaltung der Erfindung beträgt der Gehalt an Eisen mindestens 5 Gew.-% im Agglomeratstein, um eine effektive Roheisenerzeugung zu begünstigen. Insbesondere beträgt der Gehalt an Eisen mindestens 6 Gew.-%, vorzugsweise mindestens 7 Gew.-%, bevorzugt mindestens 8 Gew.-%, besonders bevorzugt mindestens 10 Gew.-%. Über den Gehalt an Eisen kann auch die Dichte des Agglomeratsteins gezielt eingestellt werden.

Als Kohlenstoff-Träger sind grundsätzlich alle Materialien mit freiem Kohlenstoff geeignet. Gemäß einer Ausgestaltung der Erfindung liegen die Kohlenstoff-Träger in Form von Koksstaub, Kokslösche, Koksgrus und/oder Anthrazitkohle vor. Koksstaub, Kokslösche, Koksgrus sind insbesondere kohlenstoffhaltige Rest- und/oder Kreislaufstoffe. Die Körnung des Kohlenstoff-Trägers beträgt bis zu 5 mm, insbesondere bis zu 3 mm, vorzugsweise bis zu 2 mm. C-Träger mit einer derartigen Körnung sind besonders kostengünstig erhältlich und lassen sich bei der Eisengewinnung nur schwer nutzen.

Gemäß einer Ausgestaltung der Erfindung beträgt der Gehalt an Kohlenstoff im Agglomeratstein mindestens 25 Gew.-%. Der Gehalt kann insbesondere mindestens 27 Gew.-%, vorzugsweise mindestens 30 Gew.-%, bevorzugt mindestens 34 Gew.-%, besonders bevorzugt mindestens 37 Gew.-% betragen.

Die eingesetzten Rest- und/oder Kreislaufstoffe können insbesondere auch eine Kombination aus metallhaltigen und kohlenstoffhaltigen Stoffen sein.

Die Erfindung nutzt den an sich bereits bekannten Gedanken, ohne besondere Wärmebehandlung mit Hilfe eines Zement-Bindemittels einen Agglomeratstein kalt zu binden. Dabei ermöglicht das Zement-Bindemittel in Abhängigkeit seines Gehaltes, während der Roheisenerzeugung über den jeweiligen Zementanteil des Agglomeratsteins die Schlackenführung, insbesondere deren Anteile an MgO, CaO, SiO₂, Al₂O₃, zu variieren. Gemäß einer Ausgestaltung der Erfindung ist das Zement-Bindemittel Portlandzement oder Hüttenzement.

Gemäß einer Ausgestaltung der Erfindung kann der Agglomeratstein optional bis zu 10 Gewichts-% bezogen auf den trockenen Zustand eines Erstarrungs- und Verfestigungsbeschleuniger aufweisen, welches Wasserglas, Tonerdzement, Calciumchlorid, ein Alkali-Salz, insbesondere ein Na-Salz, oder ein Cellulose-Klebstoff, wie Kleister, sein kann.

Gemäß einer Ausgestaltung der Erfindung weist der Agglomeratstein eine zylindrische, quaderförmige oder vieleckige Form besitzt, insbesondere eine Blockform mit einer mehreckigen, insbesondere sechseckigen Grundfläche auf. Agglomeratsteine der hier in Rede stehenden Art lassen sich auf an sich bekannten Steinfertigungsmaschinen herstellen, wie sie beispielsweise für die Produktion von Pflastersteinen eingesetzt werden. Derartige Steinfertigungsmaschinen ermöglichen eine besonders kostengünstige Herstellung und tragen mit dazu bei, dass die erfindungsgemäßen Agglomeratsteine zu einem besonders günstigen, die Wirtschaftlichkeit ihres Einsatzes weiter steigernden Preis hergestellt werden können.

Als "Grünkörper", d.h. nach seiner Formgebung im noch feuchten Zustand, sollte der Wassergehalt des Agglomeratsteins weniger als 25 Gew.-% betragen. Die Herstellung von erdfeuchtkrümmeligen Grünkörpern ist gegenüber der Verarbeitung von Massen mit höherem Feuchtigkeitsgehalt vereinfacht. Zudem wird durch die Begrenzung des Wassergehalts der Grünkörper vermieden, dass überflüssiges Wasser im Elektroofen mit hohem Energieaufwand ausgetrieben werden muss.

Um die Oberfläche und somit die Wirkfläche des Agglomeratsteins insbesondere vorteilhaft zu erhöhen, kann beispielsweise mindestens eine Öffnung in Form eines Sacklochs oder vorzugsweise eines durchgehenden Lochs im Agglomeratstein vorgesehen sein.

Der Agglomeratstein kann nach drei Tagen eine Frühfestigkeit von mindestens 5 N/mm² und nach 28 Tagen eine Kaltdruckfestigkeit von mindestens 10 N/mm², insbesondere von mindestens 15 N/mm², besitzen.

Gleichzeitig reicht die Frühfestigkeit des beschaffenen Agglomeratsteins dazu aus, dass sie sich bereits kurze Zeit nach ihrer Herstellung transportieren lassen. Dies ermöglicht es beispielsweise, die Agglomeratsteine bald nach ihrer Formung in einem Trocknungsraum zu stapeln, in dem sie dann besonders effektiv getrocknet werden können.

Erfindungsgemäße Agglomeratsteine lassen sich besonders einfach herstellen. Dazu wird ein Kohlenstoff-Träger und ein Metall-Träger mit einem als hydraulische Zementphase vorliegenden Bindemittel sowie wahlweise mit einem Erstarrungs- und Verfestigungsbeschleuniger mit der Maßgabe gemischt, dass der Anteil des Zement-Bindemittels an der erhaltenen Mischung im trockenen Zustand (in Gew.-%) 6 - 15%, der Anteil des Kohlenstoff-Trägers bis zu 25 bis 60 % sowie der Anteil an Erstarrungs- und Verfestigungsbeschleunigern bis zu 10%, und der Rest aus an Metall-Träger beträgt. Die erhaltene Mischung wird in Formen gefüllt. Gemäß einer ersten Verfahrensvariante wird die Mischung dann verpresst, bevor sie getrocknet wird. Alternativ ist es jedoch auch möglich, anstelle des Verpressens ein Rütteln der in die Form eingefüllten Mischung durchzuführen, um eine möglichst homogene Verteilung und Verbindung der einzelnen Bestandteile der Mischung zu erreichen. Optimale Eigenschaften der Agglomeratsteine lassen sich dadurch erzielen, wenn das Verpressen und Rütteln in Kombination oder in geeigneter Weise aufeinander folgend durchgeführt wird.

Die Erfindung sieht weiterhin eine Verwendung eines erfindungsgemäß beschaffenen Agglomeratsteins in einem Elektroofen vor.

Als Elektroofen kommen alle elektrisch betriebenen Einschmelzer in Frage. Der elektrische Einschmelzer ist bevorzugt ein Elektroofen der Gattung OSBF (Open Slag Bath Furnace). Hierzu zählen Elektroreduktionsöfen, vor allem SAF (Submerged Electric Arc Furnace), welche Schmelzöfen mit Lichtbogen-Widerstandserwärmung sind, die Lichtbögen zwischen der Elektrode und der Feststoff und/oder der Schlacke bilden oder welche den Feststoff und/oder die Schlacke mittels Joule-Effekt erwärmen. Beim SAF ist die Elektrode (bzw. sind die Elektroden, wenn mehrere vorhanden sind) in die Charge und/oder Schlacke eingetaucht. Je nach Funktionsprinzip/Betriebsweise können die Elektroreduktionsöfen als Wechselstrom-Lichtbogen-Reduktionsöfen (SAFac) oder Gleichstrom-Lichtbogen-Reduktionsöfen (SAFdc) ausgeführt sein. Alternativ können auch Schmelzöfen mit direkter Lichtbogeneinwirkung, welche vom oben beschriebenen Funktionsprinzip/Betriebsweise abweichen, sogenannte EAF (Electric Arc Furnace) zum Einsatz kommen, welche Lichtbögen zwischen der Elektrode und dem Metall bilden. Dies umfasst den Wechselstrom-Lichtbogen-Schmelzofen (EAFac), den Gleichstrom-Lichtbogen-Schmelzofen (EAFdc) und den Pfannenofen LF (Ladle Furnace).

Der Vorteil bei der Verwendung von Elektroreduktionsöfen mit Lichtbogen-Widerstandserwärmung (SAF) ist, dass diese mit einer reduzierenden Atmosphäre betrieben werden, wohingegen Schmelzöfen mit direkter Lichtbogeneinwirkung (EAF) mit einer oxidierenden Atmosphäre betrieben werden. Die erfindungsgemäßen Agglomeratsteine können mithin auch in sogenannten EAF's eingebracht werden.

Nachfolgend wird die Erfindung anhand von Ausführungsbeispielen näher erläutert.

Unterschiedliche Mischungen, s. Tabelle 1, sind in einer an sich bekannten Steinformmaschine gerüttelt und zu blockförmigen Agglomeratsteinen verpresst worden, die eine sechseckige Grundfläche mit einer Kantenlänge von ca. 25 mm und eine Höhe von 90 mm aufwiesen.

**Tabelle 1**

| **Agglo** | **Zement [%]** | **Kohlenstoff-Träger [%]** | **Metall-Träger [%]** | **Dichte [kg/m³]** | **C-Gehalt [Gew.-%]** | **Fe-Gehalt [Gew.-%]** | **Festigkeit [N/mm²]** | **erf.** |
|---|---|---|---|---|---|---|---|---|
| 1 | 20 | 70 | 10 | 1,49 | 63 | 7 | 7,46 | nein |
| 2 | 15 | 40 | 45 | 1,48 | 36 | 12 | 2,5 | nein |
| 3 | 15 | 45 | 40 | 1,8 | 40,5 | 28 | 10,77 | nein |
| 4 | 10 | 45 | 45 | 2,1 | 40,5 | 32,9 | 5,2 | ja |
| 5 | 10 | 45 | 45 | 2,05 | 40,5 | 36 | 3,8 | ja |
| 6 | 10 | 40 | 50 | 2,21 | 36 | 38,5 | 6,26 | ja |

Als Kohlenstoff-Träger kamen bei allen Mischungen Kokslösche (Reststoff) mit einer Körnung bis zu 3 mm zum Einsatz. Als Metall-Träger kamen bei 1 und 4 bis 6 eisenhaltige Stäube (Reststoffe) mit einer Körnung bis zu 3 mm aus dem Oxigenstahlwerk, bei 2 eisenhaltige Reststoffe mit einer Körnung bis zu 3 mm aus Gichtgasschlämmen und Pfannenofenschlacke und bei 3 eisenhaltige Stoffe mit einer Körnung bis zu 3 mm aus Roheisenentschwefelungsschlacke zum Einsatz. Als Zement kamen bei allen Mischungen in Tabelle 1 Portlandzement zum Einsatz.

Die Feuchte der Mischung der "Grünkörper" nach der Entnahme aus der Steinformmaschine betrug bei allem Agglomeratsteinen zwischen ca. 14 % und ca. 21 %. Die Festigkeit in Tabelle 1 ist nach Trocknung (Trockenschrank 24 h bei 105 °C) und einer Lagerung von 3 Tagen ermittelt worden. Die Gehalte an Kohlenstoff und Eisen in Gew.-% wurden anhand von Analysenberechnungen, dem Fachmann geläufig, ermittelt. Auch die (Roh-)Dichte wurde jeweils durch das Steingewicht bezogen auf das Steinvolumen erfasst.

Die Agglomeratsteine 4 bis 6 weisen eine Dichte auf, die im Wesentlichen höher ist, als die Dichte der flüssigen Schlacke, welche beim Erschmelzen von eisenhaltigen Einsatzstoffen, vorzugsweise beim Erschmelzen von Eisenschwamm und ggf. Schrott sowie Schlackenbildner, entsteht. Somit können diese Agglomeratsteine unterhalb der flüssigen Schlacke während des Elektroofenbetriebs eintauchen, sich schnell(er) auflösen und den Kohlenstoff direkt an das Roheisen abgeben.

An einem Ausführungsbeispiel wurden in einem Elektroofen des Typs "SAF" im Labormaßstab 100 kg Eisenschwamm aus einer zu 100% mit Wasserstoff als Reduktionsgas verwendeten Direktreduktion verwendet. Somit lag der in Summe eingebrachte Kohlenstoffgehalt über den Eisenschwamm weniger als 0,30 Gew.-%. Schlackenbildner wurden in üblichen Gehalten zugesetzt. Nach dem die eingebrachten Feststoffe vollständig erschmolzen worden sind und Roheisen und eine darüber angeordnete flüssige Schlacke vorlag, wurden ca. 10 kg Agglomeratsteine des Typs "4" zugesetzt, so dass sich nach dem Schmelzbetrieb ein Kohlenstoffgehalt in der Eisenschmelze von ca. 4,3 Gew.-% ergab. Bedingt durch den Eisenanteil im Agglomeratstein wurde auch die Ausbringung des Roheisens um bis ca. 3% erhöht. So kann beispielsweise zwischen 30 kg und 45 kg Kohlenstoff pro Tonne erzeugtem Roheisen über Agglomeratsteine zugeführt werden. Auch die Basizität der Schlacke wurde verändert, was sich in einer Zunahme bis ca. 5 kg Gangartschlackenmenge bemerkbar machte.

Das derart aufgekohlte Roheisen kann dann in nachgeschalteten Konverter beispielsweise in LD-Stahlwerken insbesondere ohne weitere Vorbehandlung zu Rohstahl weiterverarbeitet werden.

## Patentansprüche

1. Agglomeratstein zum Einsatz im Elektroofen, welcher in Gewichts-% bezogen auf den trockenen Zustand 6 - 15% eines Zement-Bindemittels, 25 - 60% eines Kohlenstoff-Trägers und als Rest einen Metall-Träger aufweist.

2. Agglomeratstein nach Anspruch 1, wobei der Agglomeratstein eine Dichte von mindestens 1,90 kg/m³ hat.

3. Agglomeratstein nach einem der voranstehenden Ansprüche, wobei die Metall-Träger in Form von Erzen, Reststoffen und/oder Kreislaufstoffen vorliegen.

4. Agglomeratstein nach einem der voranstehenden Ansprüche, wobei die Metall-Träger eine Körnung von bis zu 5 mm aufweisen.

5. Agglomeratstein nach einem der voranstehenden Ansprüche, wobei sein Gehalt an Eisen mindestens 5 Gew.-% beträgt.

6. Agglomeratstein nach einem der voranstehenden Ansprüche, wobei die Kohlenstoff-Träger in Form von Koksstaub, Kokslösche, Koksgrus und/oder Anthrazitkohle vorliegen.

7. Agglomeratstein nach einem der voranstehenden Ansprüche, wobei die Kohlenstoff-Träger eine Körnung von bis zu 5 mm aufweisen.

8. Agglomeratstein nach einem der voranstehenden Ansprüche, wobei sein Gehalt an Kohlenstoff mindestens 25 Gew.-% beträgt.

9. Agglomeratstein nach einem der voranstehenden Ansprüche, wobei das Zement-Bindemittel Portlandzement oder Hüttenzement ist.

10. Agglomeratstein nach einem der voranstehenden Ansprüche, wobei der Agglomeratstein optional bis zu 10 Gewichts-% bezogen auf den trockenen Zustand eines Erstarrungs- und Verfestigungsbeschleuniger aufweisen kann, welches Wasserglas, Tonerdzement, Calciumchlorid, ein Alkali-Salz, insbesondere ein Na-Salz, oder ein Cellulose-Klebstoff, wie Kleister, sein kann.

11. Agglomeratstein nach einem der voranstehenden Ansprüche, wobei er eine zylindrische, quaderförmige oder vieleckige Form besitzt, insbesondere eine Blockform mit einer mehreckigen, insbesondere sechseckigen Grundfläche aufweist.

12. Agglomeratstein nach einem der voranstehenden Ansprüche, wobei er als Grünkörper vor seiner Trocknung einen Wassergehalt von weniger als 25% aufweist.

13. Verwendung von gemäß einem der Ansprüche 1 bis 12 beschaffenen Agglomeratsteinen in einem Elektroofen.
